# EUROPEAN PATENT SPECIFICATION

(11) **EP 3 875 234 B1**
(45) Date of publication and mention of the grant of the patent: **08.05.2024**
(21) Application number: 21160414.5
(22) Date of filing: 03.03.2021
(51) Int. Cl.: B27G 21/00, B23Q 11/08

(54) **INDUSTRIAL PROCESSING MACHINE COMPRISING A SAFETY SYSTEM**
INDUSTRIELLE VERARBEITUNGSMASCHINE MIT EINEM SICHERHEITSSYSTEM
MACHINE DE TRAITEMENT INDUSTRIEL COMPRENANT UN SYSTÈME DE SÉCURITÉ

(30) Priority: 04.03.2020 IT 202000004546
(43) Date of publication of application: 08.09.2021
(73) Proprietor: C.M.S. S.p.A., 24019 Zogno (BG) (IT)
(72) Inventor: BALESTRINI, Antonio, 22063 Cantù (CO) (IT)
(74) Representative: Biallo, Dario

(56) References cited:
- EP-A1- 1 840 448
- EP-A1- 1 985 412
- EP-A1- 2 063 165
- WO-A1-2017/103780
- DE-A1- 10 020 804
- DE-A1-102006 020 679
- DE-U1-202005 002 837
- DE-U1-202013 004 188

## Description

The present invention refers to an industrial processing machine comprising a safety system, according to the preamble of claim 1. Such a machine is known from the document DE 100 20 804 A1.

As is known, there are various machines for processing elements or pieces of different materials in order to give them desired shapes and with the aim of forming them for specific purposes.

An example of such machines are tenoning machines, which are used for the processing of pieces of wood, in particular for the production of tenons which represent male coupling elements, used for the production of furnishing elements such as chairs, doors and windows. These machines allow to profile one end of the inserted wooden elements in order to create the desired tenon.

The tenons are then inserted into housing elements, so-called mortises, representing the female coupling elements, and which are made by special processing machines.

The profiling or milling operations take place by means of special tools that rotate at a high speed around the piece to be formed, and profile it.

Material processing machines, like all other machines that foresee tools for cutting or milling materials, can involve threats to the safety of the operators maneuvering them. As a matter of fact, there are specific international regulations defining rules for imposing safety levels, in order to reduce and ideally eliminate the risk of accidents that may occur.

Such machines for machining pieces or elements normally comprise a supporting base structure sustaining the various components or necessary structures, and which is at least partially closed in such a way as to define an internal space of the machine in which the components and in particular the one or more tools for the machining of parts are housed. In general terms, the machines also include one or more working stations in which the piece is processed, one or more parking stations in which the tool is parked when not in use. In particular, the working and parking stations are placed side by side along the direction of longitudinal development of the machine and are generally alternated with each other. The machines also include handling and guiding means in order to move and guide the tool in such a way that the latter is able to translate across the aforementioned stations.

In order to optimize the processing, two, or at least two, working stations and at least one parking station are often provided. In this way it is possible to work, at first, on a peace placed in the first working station, using the tool, and subsequently to move the tool to the second working station for the processing of a second piece thus allowing an operator to replace the first piece in the first working station with a new piece to be machined, during the processing of the second piece. By doing so it is possible to ensures continuous operation of the machine, avoiding the need to stop it to replace the processed pieces with new pieces to be processed.

The working stations generally include platforms on which to place the pieces to be processed; these platforms are arranged at access points or openings made on the supporting structure in order to allow access from the outside to the inside of the machine. In this way the operator can place the pieces to be processed on the platform so that they protrude towards the inside of the machine so as to allow the tool to work on them.

Ideally, the operator should not be able to reach the tool neither when it is in the working station nor when it is in the parking station.

However, since the operator himself places the workpiece in position, he is, not only inevitably within reach of the tool and the areas in which the workpiece is being machined, but there is direct access to the tool via the aforementioned access points.

In fact, the reach of one of these areas by the operator, for example with an arm or a hand, or the escape of splinters involves a high risks of injury.

When the tool operates in the working stations, the relative access opening is at least partially occupied by the workpiece and the danger is clear and evident for the operator. When the tool is in a working station, for example the first working station, it is possible to access improperly and dangerously inside the machine through the access opening of the second working station which is instead free. Even more risky for safety is the condition in which the tool is in the parking station; in this case, in fact, the operator can dangerously access the inside of the machine from both working stations which result free. Furthermore, it should be considered that, when the tool is in the parking station, it is often not immediate for the operator to understand if the tool is moving or if it has stopped.

A solution to this technical problem would be to perimeter the tool with safety barriers; however this solution suffers from the drawback that the perimeter barriers would collide with the workpiece which, on the other hand, protrudes towards the inside of the machine to allow the tool to work on it. This solution therefore requires constant monitoring of the operation of the machine by the operators, in order to insert the workpiece only when the tool is in the working position, i.e. the barriers have passed the point where the piece is inserted.

The purpose of the present invention is to obviate the aforementioned drawbacks and in particular to devise an industrial processing machine comprising a safety system capable of preventing the tool from being reached improperly without however representing an obstacle or slowing down the processing of machine itself.

A further object of the present invention is to provide a fully automatic safety system for industrial processing machines.

These and other purposes according to the present invention are achieved by realizing an industrial processing machine comprising a safety system as set forth in claim 1.

Further characteristics of the machine are the object of the dependent claims.

The characteristics and advantages of the industrial processing machine comprising a safety system according to the present invention will become more evident from the following, exemplary and non-limiting description, referring to the attached schematic drawings in which:
- figure 1 is a perspective view of an industrial processing machine comprising a safety system according to the present invention;

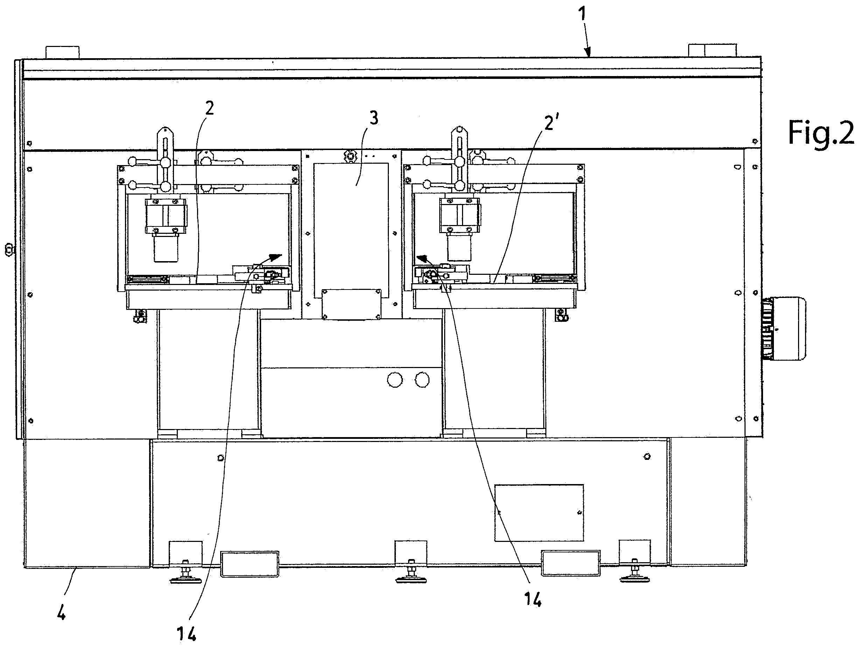

- figure 2 is a front view of the machine of figure 1;
- figure 3 is a perspective view of the machine of Figure 1 without its casing;
- figure 4A, 4B and 4C are perspective views of the machine of figure 3 in which the tool is respectively in a first position, a second position and a third position;
- figure 5A, 5B and 5C are perspective views of details of the safety system of figures 4A, 4B and 4C respectively;
- figures 6A, 6B and 6C are perspective views of details of the safety system with the tool in the positions respectively of figures 5A, 5B and 5C;
- figures 7A, 7B and 7C are perspective views of a detail of the safety system when it is respectively in the positions of figures 6A, 6B and 6C.
- figures 8A, 8B and 8C are top views of the safety system of Figures 7A, 7B and 7C respectively.

With reference to the figures, an industrial processing machine is shown, indicated as a whole with 1, and comprising a safety system 10.

In the following description, particular reference will be made to a tenoning machine 1, however this does not exclude that the safety system for industrial processing machines can be applied to different types of machines, such as for example end-cutting, drilling or mortising machines or machines that group several functions, and which have one or more working stations 2 and at least one tool parking station 3.

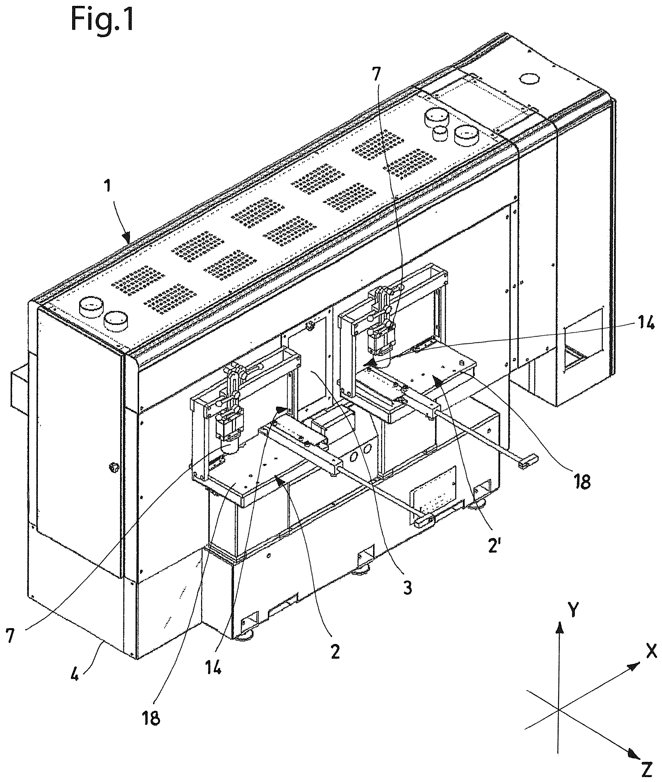

As can be seen in figure 1, the machine 1 comprises a supporting structure 4 suitable for supporting the functional components of the machine; such supporting structure 4 is at least partially closed in such a way as to define an internal space of the machine so as to cover the components and avoid access to the various parts, mobile and not by operators.

For simplification purposes, the Cartesian plane visible in figure 1 is defined in which the x axis is the longitudinal development axis of the machine 1, the y axis is the vertical development axis of the machine 1 and the z axis is the depth development axis of the machine 1.

The machine 1 illustrated includes two working stations 2, 2' positioned one after the other along the x direction with the interposition of an intermediate resting station, so-called parking station 3.

With reference to the figures, with first position of the tool 6 it is referred to the position on the parking station 3, second position is referred to the position of the first working station 2 and finally, third position is referred to the position of the second working station 2'.

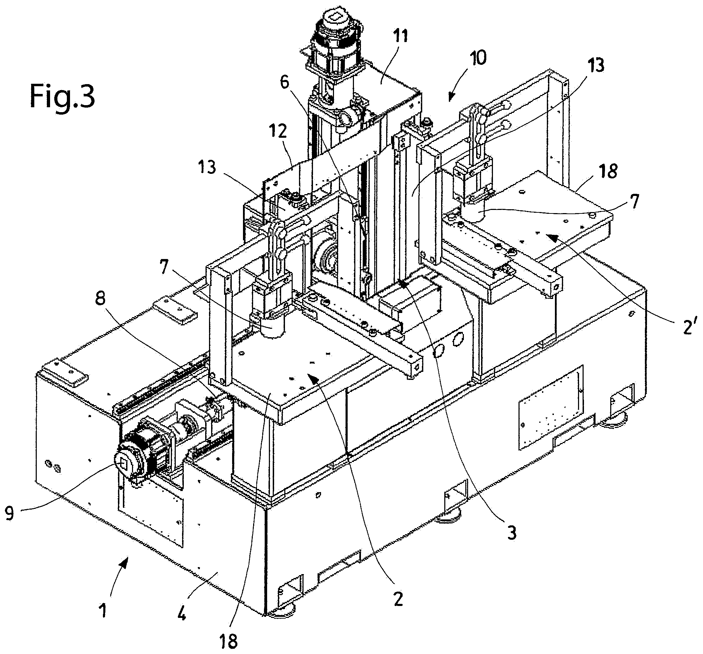

As visible in figure 3, the machine 1 includes a tool 6, a guide 8 and a motor 9 suitable for moving and guiding the tool 6.

Generally the tool 6 is solidly mounted on a movable pillar 11 through which it is movable in translation on the guide 8, along the x direction.

Tool 6 refers to any type of tool suitable for treating and cutting a material.

In the parking station 3 the tool 6 is positioned between two consecutive processing operations or at the end of the operation of the machine 1.

Each working station 2, 2' advantageously comprises a platform 18 where to place a piece to be processed and a pressure element 7. The pressure elements 7 are designed to hold the piece to be worked in position during its processing.

Furthermore, the pressure elements 7 can detect the presence of a piece to be machined and activate the movement of the tool 6.

In correspondence with the second and third positions, the machine 1 has access points or openings 14 made on the supporting structure 4 to allow access from the outside to the inside of the machine 1. In this way the operator can lay the pieces to be processed on the platform 18 in such a way that they protrude towards the inside of the machine 1 so as to allow machining by the tool 6.

For simplicity of discussion, reference will be made hereinafter by way of example to a front facade of the machine 1, meaning the facade where the above-mentioned access openings are made.

According to the present invention, the industrial processing machine 1 comprises a safety system, indicated with the number 10.

The safety system 10 comprises a supporting safety structure 12 and at least one protection element 13 associated with said supporting safety structure 12.

In particular, each protection element 13 is associated with a respective perimeter portion of the supporting safety structure 12 so as to be movable from a first position with full encumbrance in which it projects towards the front facade of the machine 1 preventing the reaching of said tool 6 from the respective perimeter portion, to a second position with reduced encumbrance.

According to the invention, the safety system 10 comprises at least one actuating means 16 configured to allow the passage of the at least one protection element 13 from the first position to the second position when the tool 6 passes from the at least one parking station 3 to the at least one working station 2, 2'.

This actuating means 16 can be, for example, a pneumatic and / or electric and / or hydraulic actuator.

In the preferred embodiment illustrated, the at least one actuating means 16 comprises an abutment element 16, fixed on the machine 1 at the at least one working station 2, 2'. The at least one abutment element 16 is arranged to force the passage of the at least one protection element 13 from the first position to the second position when the tool 6 passes from the at least one parking station 3 to the at least one working station 2 , 2', to which the protection element 13 is associated.

In particular, as can be seen in the illustrated embodiment, when there are two or more working stations 2, 2', the safety system 10 comprises two protection elements 13, associated with the supporting safety structure 12 so as to be located at the two sides of the tool 6 with respect to the x direction. If, on the other hand, the machine 1 comprises a single working station 2, 2', the safety system 10 comprises a single protection element 13 since there is only one access point 14 to the tool 6, i.e. a single point for the insertion of the workpiece.

In other words, the protection elements 13 serve to prevent access to the tool 6 by the operator through the access point 14 into which the workpiece is inserted; therefore in the case in which the machine has a single working station 2, 2' there is only one area of access to the tool 6, thus a single area of danger, therefore the safety system 10 provides only one protection element 13.

Each or only the protection element 13 precedes the tool 6 when it moves into the working area 2, 2' along the x direction. It can therefore be stated that in the case of multiple protection elements 13, each of them is associated with the respective working station 2, 2 ' .

Therefore, when the protection element 13 is in its first position it is able to block the access to the tool 6 from the working area 2, 2' to which it is associated.

On the other hand, when the protection element 13 is in its second position with reduced encumbrance, it does not represent an obstacle for the circulation of the assembly formed by the tool 6 and the supporting safety structure 12 in correspondence of the working area 2, 2' to which it is associated.

This passage of the at least one protection element 13 from the first position to the second position is forced by the at least one abutment element 16, located in correspondence with the at least one working station 2, 2'.

In particular, reference will be made to the embodiment illustrated in the figures which comprises two working stations 2, 2' and therefore two protection elements 13, it being understood that a similar description applies in the case in which the machine 1 comprises only one working station 2, 2', therefore one protection element 13.

Preferably, as in the illustrated embodiment, the protection elements 13 are rotating protections or bulkheads 13, illustrated for example in figure 3.

In this case, the rotating protections 13 are hinged to the supporting safety structure 12, as visible in the attached figures, and pass from a first position, visible in figures A, in which they are transversal to the x axis, to a second position, visible in figures B and C, in which they are parallel to the same axis, by means of a rotary movement around the vertical axis on which they are hinged to the supporting safety structure 12. Preferably, it is a movement of 90°.

Preferably, the rotating bulkheads 13 are associated to contrast elements 15 adapted to bring the rotating bulkheads 13 from the second position to the first position when the latter are free to rotate, thus in the absence of the abutment elements 16. Furthermore, the contrast elements 15 are designed to limit the rotation of the bulkheads themselves.

In the illustrated embodiment, the bulkheads or rotating protections 13 are constrained to the aforementioned 90° movement.

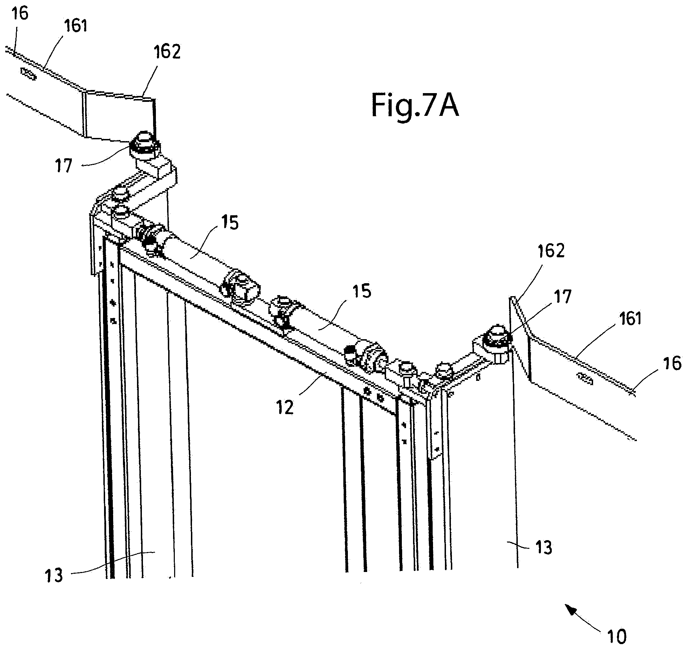

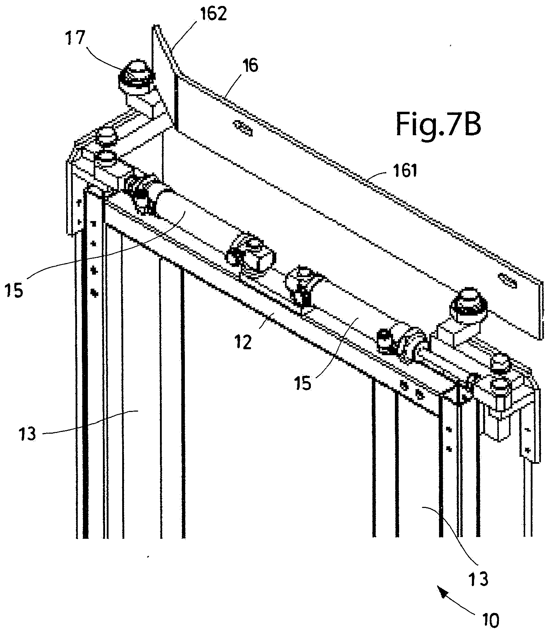

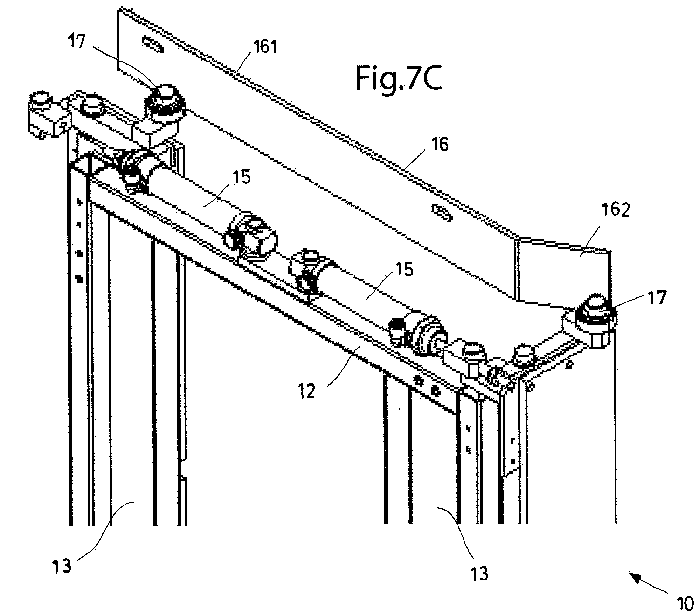

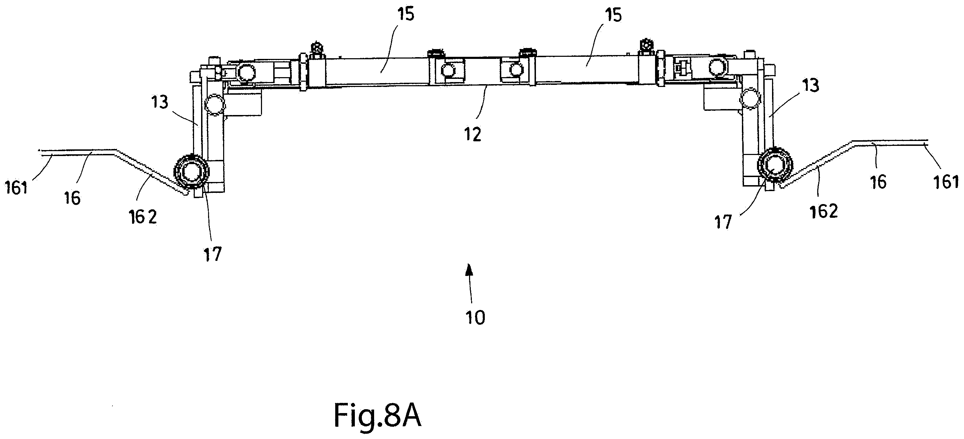

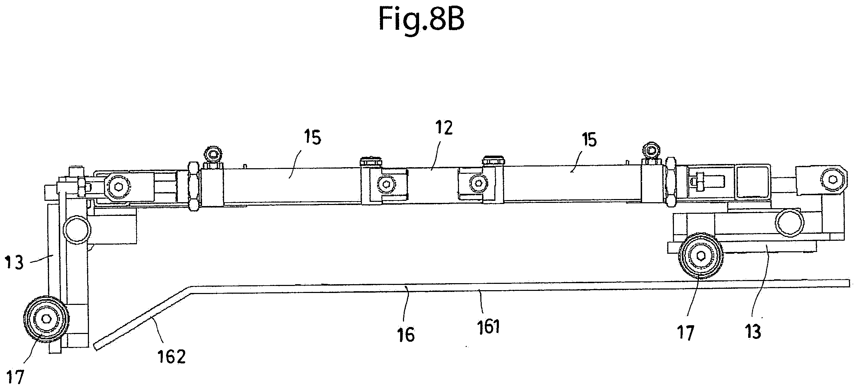

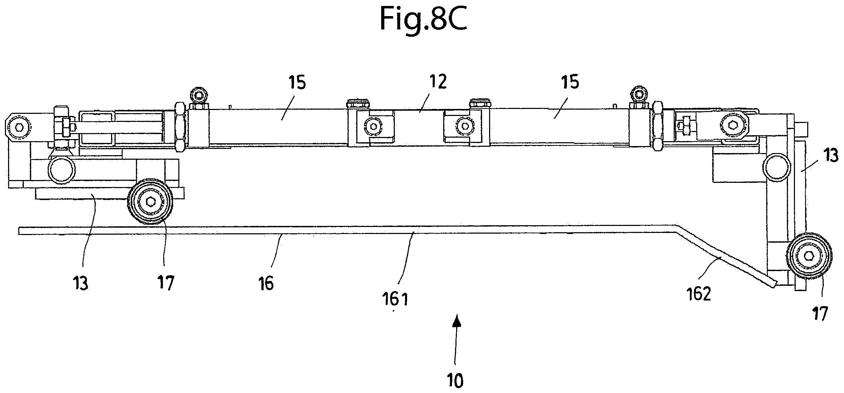

For example, these contrast elements 15 can be preloaded contrast cylinders 15, as visible in figures 7A, 7B, 7C and 8A, 8B, 8C.

In practice, the supporting safety structure 12 is mobile as a whole along the x direction, together with the tool 6, while the protection elements 13 are further free to rotate around an axis parallel to the y axis.

In the illustrated embodiment, the safety system 10 comprises two abutment elements 16 associated with each rotating protection 13, and adapted to generate the 90° movement thereon. In particular, the abutment element 16 is positioned in correspondence with each working station 2, 2' so as to act on the corresponding rotating protection 13 when the tool 6, therefore the supporting safety structure 12, moves in proximity to it.

Preferably, each rotating bulkhead 13 comprises a roller or bearing 17 placed at the point intended to collide with the abutment element 16 when the tool 6 moves towards a respective working station 2, 2'. In particular, as can be seen in figures 8A, 8B and 8C, the roller 17 serves to facilitate the passage of the protection elements 13 from the first position to the second position.

As already mentioned, in the optimal illustrated embodiment, the system 10 also provides a preloaded contrast cylinder 15 adapted to directly or indirectly exert a thrust on the rotating bulkhead 13 in such a way as to naturally bring it to the first position when it is free to rotate; the preloaded contrast cylinder 15 is also able to constrain the movement of the rotating protection 13 and substantially prevent it from rotations greater than about 90°. In particular, this preloaded contrast cylinder 15 presents a piston which, when the rotating bulkhead 13 passes from the second position to the first position, thus when the rotating bulkhead 13 has made a rotation of about 90°, blocks a further rotation in the same direction. This feature also prevents forced opening of the protection elements 13 by the operator.

As can be seen in figures 8C and 8B, each of the abutment elements 16 comprises a longitudinal portion 161, along the x direction, near the working station 2, 2' and an inclined end portion 162 proximal to the parking station 3, which extends towards the front facade of the machine 1 so as to be able to intercept the protection element 13 when it is in its first position and the tool 6 passes from the parking station 3 to a working station 2, 2'. The abutment element 16 is positioned in such a way that the inclined end portion 162 abuts with the rotating protection 13, preferably in correspondence with the roller 17, and accompanies and forces its 90° movement from its first position to its second position. The longitudinal portion 161 serves to keep the rotating protection 13 in this second position when the protection structure 12, and therefore the tool 6, slide in correspondence of the working station 2, 2'. In fact, when the rotating protection 13 is in its second position it faces the longitudinal portion 161 which offers an abutment to the rotating protection 13 itself.

Advantageously, the rotating protection 13 in its second position has a smaller encumbrance, along the z axis, so as not to abut with the workpiece inserted in the working station 2, 2'.

The operation of the industrial processing machine comprising a safety system 10 is as follows.

The safety system 10 moves in part in conjunction with the tool 6, and depending on its position it assumes a configuration so as to ensure at the same time the closure of the area in which the tool 6 is located and the freedom of movement thereof along the x direction, even in the presence of the workpiece.

When the tool 6 is in the parking station 3, the supporting safety structure 12 is also in the parking station 3 and the rotating protections 13 are in their first position. In this configuration, the rotating protections 13 perimeter the tool 6 and block access to the tool 6 from the working stations 2, 2'. Moreover, advantageously since they are constrained, by the abutment element 16 and by the contrast elements 15, to only their 90° movement, it is impossible for the operator to open them to reach the tool 6.

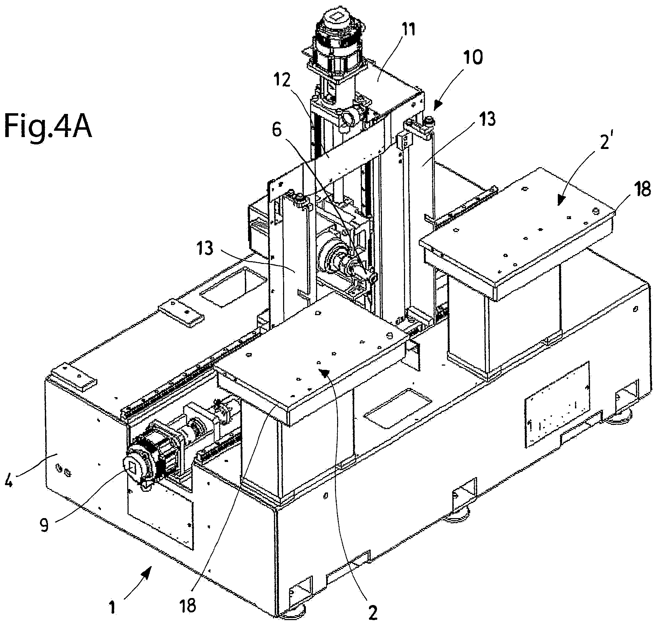

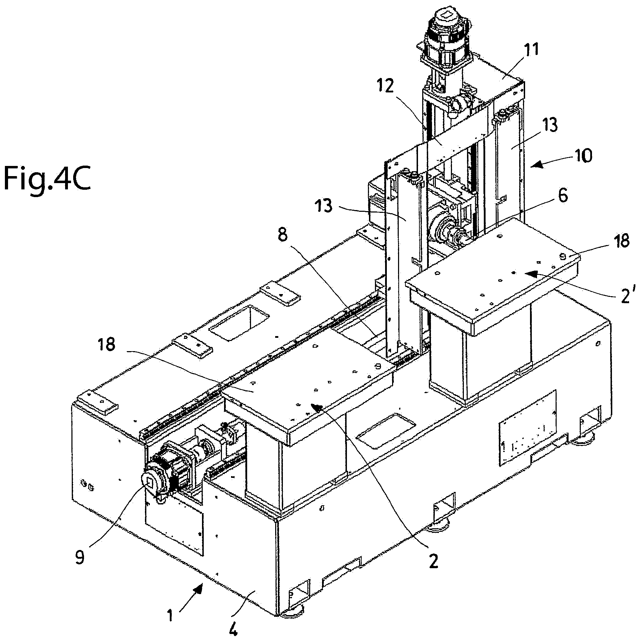

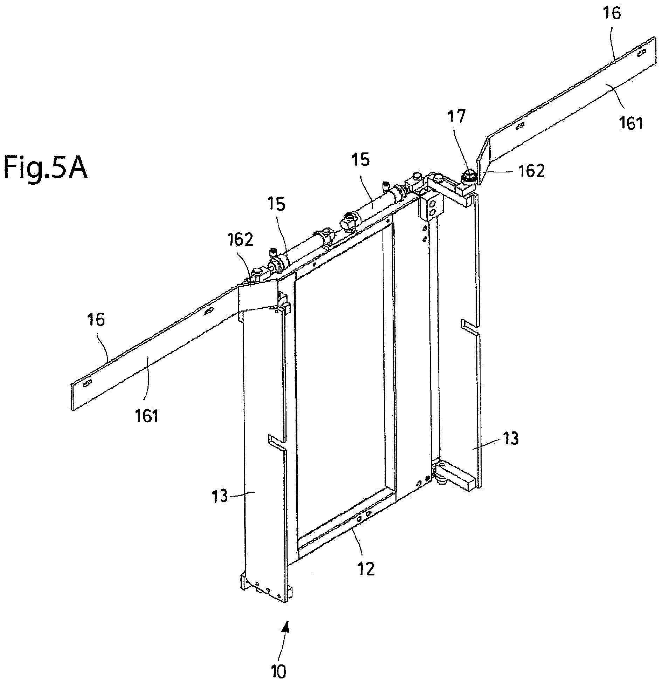

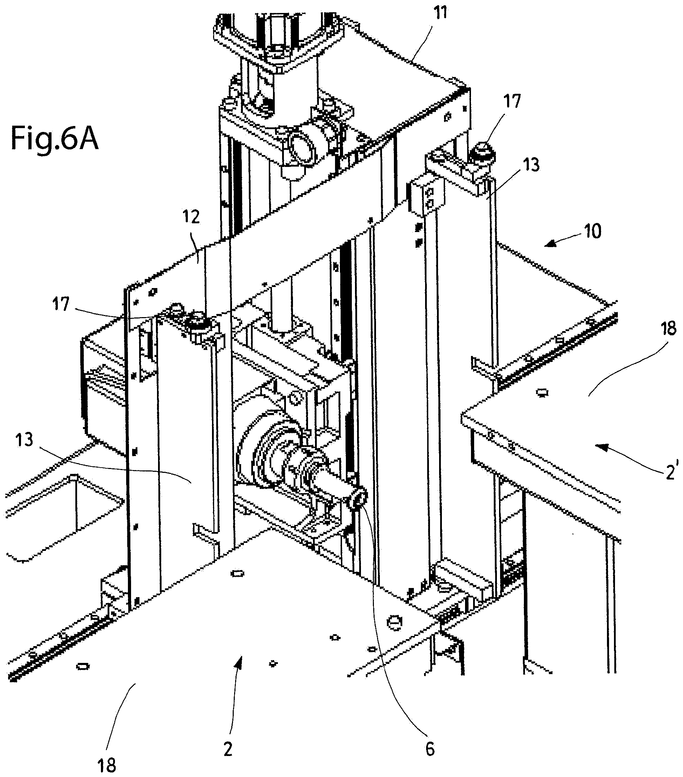

This configuration in which the tool is in the parking station 3 is illustrated in figures 4A, 5A, 6A, 7A and 8A.

The operator inserts the piece to be worked on the working stations 2, 2', thanks to the special pressure elements 7 designed to hold it in position during its processing. The pressure elements 7 detect the presence of the workpiece and activate the machine 1.

When the machine 1 is put into operation or in any case the tool 6 is moved transversely along the x direction, together with the safety supporting structure 12, on a working station 2, 2', the rotating protection 13 associated with the respective working station 2, 2', meets the abutment element 16 which pushes it to rotate and move to its second position, thanks to its inclined end portion 162. The abutment element 16 will keep the rotating protection 13 in its second position thanks to to the longitudinal portion 161 which extends along the entire working station 2, 2'. Advantageously, this allows the assembly formed by the tool 6 and the safety supporting structure 12 to circulate freely until it reaches the working station, without the rotating protection 13 colliding with the workpiece.

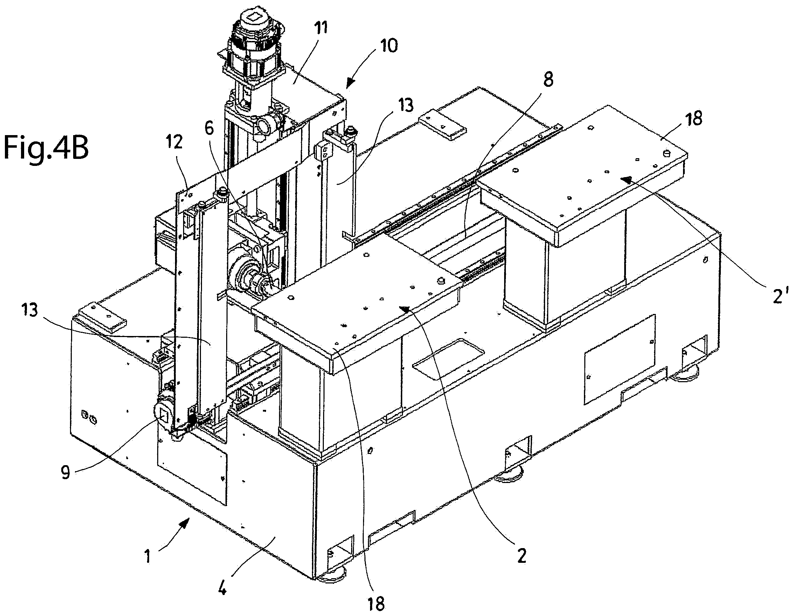

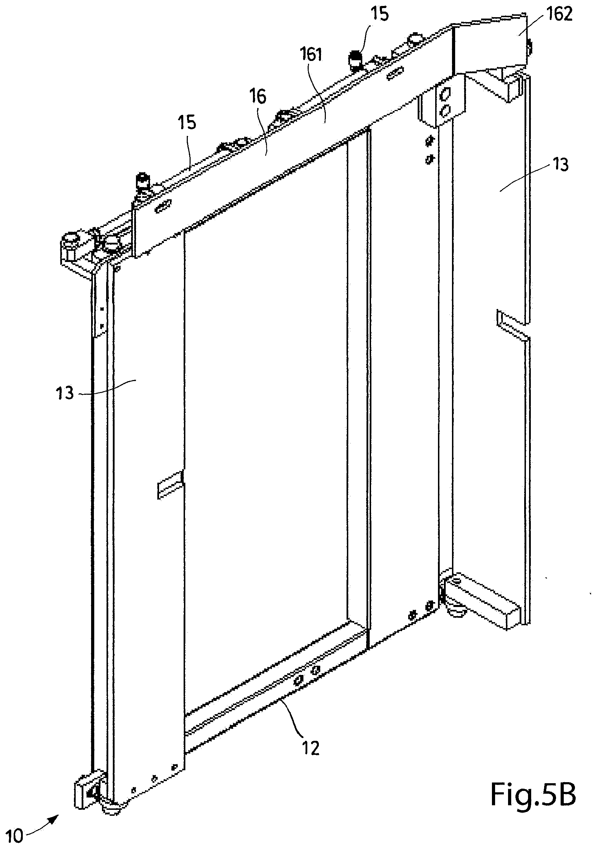

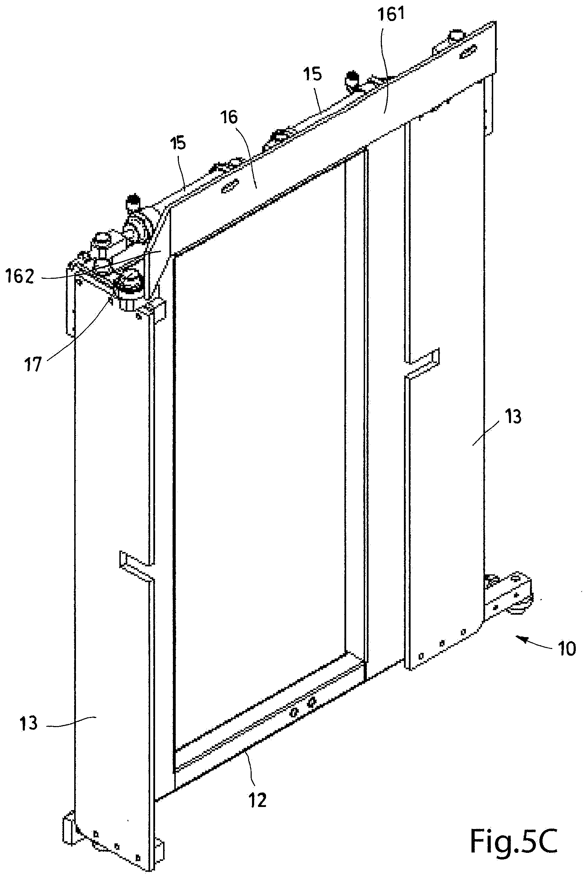

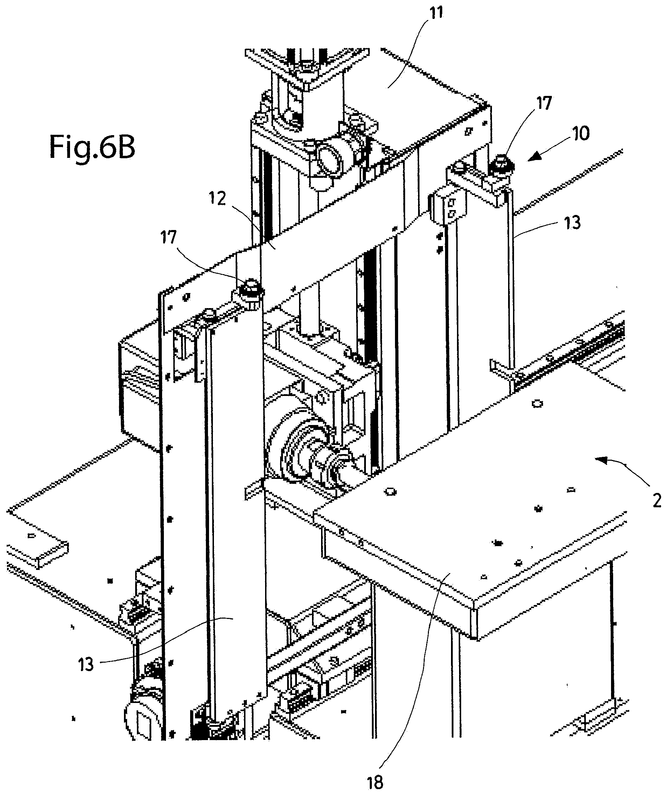

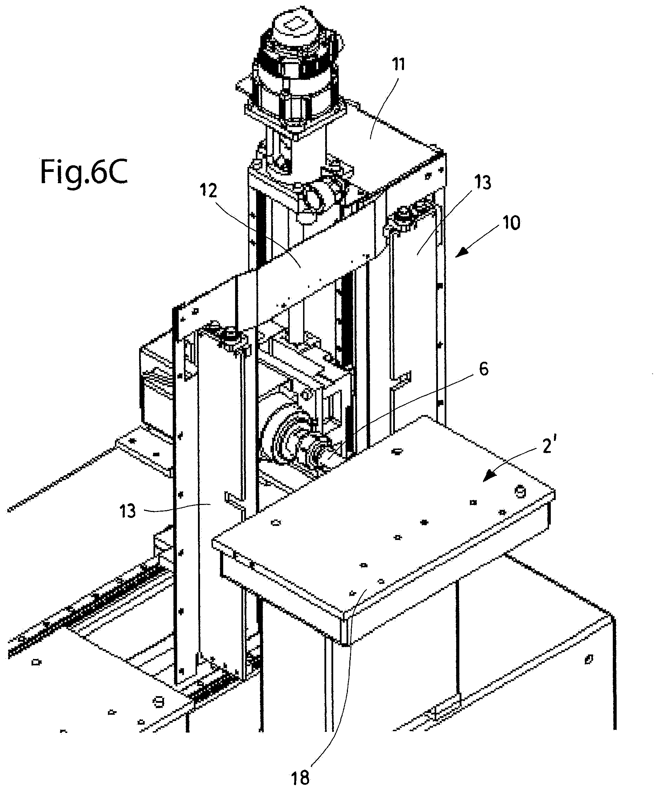

This configuration in which the tool 6 is in a working station 2, 2' is illustrated in figures 4B, 5B, 6B, 7B, 8B, 4C, 5C, 6C, 7C and 8C.

Once the processing is finished, the assembly is moved back to the parking station 3, in which the rotating protection 13 resumes the first protection position.

The same happens when the tool moves to the second working station.

As results from the previous description, the safety system 10 therefore allows to perimeter the tool 6 throughout the operation of the machine 1.

Advantageously, the increase in the safety of the machine conferred by the safety system 10 allows to increase its processing speed as it is impossible to get in the way of the operators.

Advantageously, the safety system also allows protection from splinters and other elements that can be generated by the processing operations as it blocks the opening points with the outside of the machine. This feature is advantageous if, for example, it is desired to add an air or water cleaning station for the tool in the parking station which could generate splinters or splashes.

## Claims

1. Industrial processing machine (1) comprising:
- a supporting structure (4) which develops in length along a longitudinal direction x, said supporting structure (4) being at least partially closed so as to define an internal space;
- at least one working station (2, 2') and at least one parking station (3) for a tool (6), associated with said supporting structure (4) and arranged one after the other along the longitudinal direction x, in correspondence of said at least one working station (2, 2') and at least one parking station (3) on a front facade of said machine (1) being made respective access openings to said internal space;
- a tool (6) housed in said internal space and mobile along the longitudinal direction x between said at least one working station (2, 2') and said at least one parking station (3);
- a security system (10) comprising:
- a supporting safety structure (12);
- at least one protection element (13) associated with a respective perimeter portion of said supporting safety structure (12) said at least one protection element (13) being capable of reversibly passing from a first position with full encumbrance, in which it projects towards the front facade of said machine (1) preventing the reaching of said tool (6) from said respective perimeter portion, to a second position with reduced encumbrance, **characterized in that**:
- at least one actuating means (16) configured to allow the passage of said at least one protection element (13) from said first position to said second position when said tool (6) passes from the at least one parking station (3) to said at least one working station (2, 2').

2. Machine (1) according to claim 1 wherein said at least one actuating means (16) comprises a pneumatic and/or electric and/or hydraulic actuator.

3. Machine (1) according to claim 1 or 2 wherein said at least one actuating means (16) comprises one abutment element (16), fixed on said machine and arranged to force the passage of said at least one protection element (13) from said first position to said second position when said tool (6) passes from the at least one parking station (3) to said at least one working station (2, 2').

4. Machine (1) according to one of the preceding claims wherein said at least one protection element (13) is a rotating protection or bulkhead (13) hinged to said supporting safety structure (12) so as to pass reversibly from said first position to said second position by means of a rotation movement around a hinge axis.

5. Machine (1) according to claim 4 wherein said at least one rotating protection or bulkhead (13) is associated with a respective contrast element (15) adapted to bring said at least one rotating protection or bulkhead (13) from the second position to the first position when said at least one rotating protection or bulkhead (13) is free to rotate, said contrast element (15) being also arranged to limit the rotation of said at least one rotating protection or bulkhead (13).

6. Machine (1) according to claim 5 wherein said contrast element (15) is a preloaded contrast cylinder (15) .

7. Machine (1) according to claim 3 and one of claims 4 to 6, wherein each of said rotating protection or bulkheads (13) is provided with a roller or bearing (17) placed at the point intended to collide with said abutment element (16) when the tool (6) moves towards said at least one working station (2, 2').

8. Machine (1) according to claim 3 or 7, wherein said at least one abutment element (16) comprises a longitudinal portion (161), along the longitudinal direction x, proximal to said at least one working station (2, 2'), and an inclined portion (162) proximal to said parking station (3) which extends towards the front facade of said machine (1) so as to be able to intercept the protection element (13) when it is in the first position and the tool (6) passes from said at least one parking station (3) to said at least one working station (2, 2').

9. Machine (1) according to claim 3 or 7-8, wherein said working stations (2, 2') are two and said parking station (3) is interposed between said working stations (2, 2'), said protection elements (13) are two and are associated with said safety supporting structure (12) so as to be lateral with respect to said tool (6), said abutment elements (16) are two and are fixed to said supporting structure (4) in opposite positions between them.

## Patentansprüche

1. Industrielle Verarbeitungsmaschine (1) mit:
- einer Stützstruktur (4), die sich in der Länge entlang einer Längsrichtung x entwickelt, wobei die Stützstruktur (4) zumindest teilweise geschlossen ist, um einen Innenraum zu definieren;
- mindestens einer Arbeitsstation (2, 2') und mindestens einer Parkstation (3) für ein Werkzeug (6), die mit der Stützstruktur (4) assoziiert und nacheinander entlang der Längsrichtung x angeordnet sind, wobei in Übereinstimmung mit der mindestens einen Arbeitsstation (2, 2') und der mindestens einen Parkstation (3) an einer Vorderfassade der Maschine (1) jeweilige Zugangsöffnungen zu dem Innenraum ausgebildet sind;
- einem Werkzeug (6), das in dem Innenraum untergebracht und entlang der Längsrichtung x zwischen der mindestens einen Arbeitsstation (2, 2') und der mindestens einen Parkstation (3) beweglich ist;
- einem Sicherungssystem (10) mit:
- einer Stützsicherheitsstruktur (12);
- mindestens einem Schutzelement (13), das mit einem jeweiligen Umfangsabschnitt der Stützsicherheitsstruktur (12) assoziiert ist, wobei das mindestens eine Schutzelement (13) in der Lage ist, reversibel von einer ersten Position mit voller Belastung, in der es in Richtung der Vorderfassade der Maschine (1) vorsteht und das Erreichen des Werkzeugs (6) von dem jeweiligen Umfangsabschnitt verhindert, in eine zweite Position mit reduzierter Belastung überzugehen, **dadurch gekennzeichnet, dass**:
- mindestens ein Betätigungsmittel (16), das so konfiguriert ist, dass es den Übergang des mindestens einen Schutzelements (13) von der ersten Position in die zweite Position ermöglicht, wenn das Werkzeug (6) von der mindestens einen Parkstation (3) zu der mindestens einen Arbeitsstation (2, 2') übergeht.

2. Maschine (1) nach Anspruch 1, wobei das mindestens eine Betätigungsmittel (16) einen pneumatischen und/oder elektrischen und/oder hydraulischen Aktuator umfasst.

3. Maschine (1) nach Anspruch 1 oder 2, wobei das mindestens eine Betätigungsmittel (16) ein Anschlagelement (16) umfasst, das an der Maschine befestigt und so angeordnet ist, dass es den Übergang des mindestens einen Schutzelements (13) von der ersten Position in die zweite Position erzwingt, wenn das Werkzeug (6) von der mindestens einen Parkstation (3) zu der mindestens einen Arbeitsstation (2, 2') übergeht.

4. Maschine (1) nach einem der vorhergehenden Ansprüche, wobei das mindestens eine Schutzelement (13) eine drehbare Schutz- oder Trennwand (13) ist, die an der Stützsicherheitsstruktur (12) so angelenkt ist, dass sie durch eine Drehbewegung um eine Gelenkachse reversibel von der ersten Position in die zweite Position übergeht.

5. Maschine (1) nach Anspruch 4, wobei die mindestens eine drehbare Schutz- oder Trennwand (13) mit einem jeweiligen Kontrastelement (15) assoziiert ist, das geeignet ist, die mindestens eine drehbare Schutz- oder Trennwand (13) von der zweiten Position in die erste Position zu bringen, wenn die mindestens eine drehbare Schutz- oder Trennwand (13) frei drehen kann, wobei das Kontrastelement (15) auch angeordnet ist, um die Drehung der mindestens einen drehbaren Schutz- oder Trennwand (13) zu begrenzen.

6. Maschine (1) nach Anspruch 5, wobei das Kontrastelement (15) ein vorgespannter Kontrastzylinder (15) ist.

7. Maschine (1) nach Anspruch 3 und einem der Ansprüche 4 bis 6, **dadurch gekennzeichnet, dass** jede der drehbaren Schutz- oder Trennwände (13) mit einer Rolle oder einem Lager (17) versehen ist, die/das an dem Punkt angeordnet ist, der dazu bestimmt ist, mit dem Anschlagelement (16) zu kollidieren, wenn sich das Werkzeug (6) in Richtung der mindestens einen Arbeitsstation (2, 2') bewegt.

8. Maschine (1) nach Anspruch 3 oder 7, wobei das mindestens eine Anschlagelement (16) einen Längsabschnitt (161) entlang der Längsrichtung x proximal zu der mindestens einen Arbeitsstation (2, 2') und einen geneigten Abschnitt (162) proximal zu der Parkstation (3) umfasst, der sich in Richtung der Vorderfassade der Maschine (1) erstreckt, um das Schutzelement (13) abfangen zu können, wenn es sich in der ersten Position befindet und das Werkzeug (6) von der mindestens einen Parkstation (3) zu der mindestens einen Arbeitsstation (2, 2') übergeht.

9. Maschine (1) nach Anspruch 3 oder 7-8, wobei die Arbeitsstationen (2, 2') zwei sind und die Parkstation (3) zwischen den Arbeitsstationen (2, 2') angeordnet ist, die Schutzelemente (13) zwei sind und mit der Stützsicherheitsstruktur (12) so assoziiert sind, dass sie in Bezug auf das Werkzeug (6) seitlich sind, die Anschlagelemente (16) zwei sind und an der Stützstruktur (4) in entgegengesetzten Positionen zwischen ihnen befestigt sind.

## Revendications

1. Machine de traitement industriel (1) comprenant:
- une structure de support (4) qui se développe en longueur le long d'une direction longitudinale x, ladite structure de support (4) étant au moins partiellement fermée de manière à définir un espace interne;
- au moins un poste de travail (2, 2') et au moins un poste de stationnement (3) pour un outil (6), associés à ladite structure de support (4) et disposés l'un après l'autre le long de la direction longitudinale x, en correspondance dudit au moins un poste de travail (2, 2') et dudit au moins un poste de stationnement (3) sur une façade avant de ladite machine (1) étant constituée d'ouvertures d'accès respectives audit espace interne;
- un outil (6) logé dans ledit espace interne et mobile le long de la direction longitudinale x entre ledit au moins un poste de travail (2, 2') et ledit au moins un poste de stationnement (3);
- un système de sécurité (10) comprenant:
- une structure de sécurité de support (12);
- au moins un élément de protection (13) associé à une partie périphérique respective de ladite structure de sécurité de support (12), ledit au moins un élément de protection (13) pouvant passer de manière réversible d'une première position à encombrement total, dans laquelle il fait saillie vers la façade avant de ladite machine (1) empêchant l'atteinte dudit outil (6) à partir de ladite partie périphérique respective, à une seconde position à encombrement réduit, **caractérisée en ce que**:
- au moins un moyen d'actionnement (16) configuré pour permettre le passage dudit au moins un élément de protection (13) de ladite première position à ladite seconde position lorsque ledit outil (6) passe de l'au moins un poste de stationnement (3) audit au moins un poste de travail (2, 2').

2. Machine (1) selon la revendication 1, dans laquelle ledit au moins un moyen d'actionnement (16) comprend un actionneur pneumatique et/ou électrique et/ou hydraulique.

3. Machine (1) selon la revendication 1 ou 2 dans laquelle ledit au moins un moyen d'actionnement (16) comprend un élément de butée (16), fixé sur ladite machine et disposé pour forcer le passage dudit au moins un élément de protection (13) de ladite première position à ladite seconde position lorsque ledit outil (6) passe de l'au moins un poste de stationnement (3) audit au moins un poste de travail (2, 2').

4. Machine (1) selon l'une des revendications précédentes dans laquelle ledit au moins un élément de protection (13) est une protection ou une cloison rotative (13) articulée à ladite structure de sécurité de support (12) de manière à passer de manière réversible de ladite première position à ladite seconde position au moyen d'un mouvement de rotation autour d'un axe d'articulation.

5. Machine (1) selon la revendication 4, dans laquelle ladite au moins une protection ou cloison rotative (13) est associée à un élément de contraste respectif (15) adapté pour amener ladite au moins une protection ou cloison rotative (13) de la seconde position à la première position lorsque ladite au moins une protection ou cloison rotative (13) est libre de tourner, ledit élément de contraste (15) étant également disposé pour limiter la rotation de ladite au moins une protection ou cloison rotative (13).

6. Machine (1) selon la revendication 5, dans laquelle ledit élément de contraste (15) est un cylindre de contraste préchargé (15).

7. Machine (1) selon la revendication 3 et l'une des revendications 4 à 6, dans laquelle chacune desdites protections ou cloisons rotatives (13) est pourvue d'un rouleau ou d'un palier (17) placé à l'endroit destiné à entrer en collision avec ledit élément de butée (16) lorsque l'outil (6) se déplace vers ledit au moins un poste de travail (2, 2').

8. Machine (1) selon la revendication 3 ou 7, dans laquelle ledit au moins un élément de butée (16) comprend une partie longitudinale (161), le long de la direction longitudinale x, à proximité dudit au moins un poste de travail (2, 2'), et une partie inclinée (162) proximale audit poste de stationnement (3) qui s'étend vers la façade avant de ladite machine (1) de manière à pouvoir intercepter l'élément de protection (13) lorsqu'il est dans la première position et que l'outil (6) passe de ledit au moins un poste de stationnement (3) audit au moins un poste de travail (2, 2').

9. Machine (1) selon la revendication 3 ou 7 à 8, dans laquelle lesdits postes de travail (2, 2') sont deux et ledit poste de stationnement (3) est interposé entre lesdits postes de travail (2, 2'), lesdits éléments de protection (13) sont deux et sont associés à ladite structure de sécurité de support (12) de manière à être latéraux par rapport audit outil (6), lesdits éléments de butée (16) sont deux et sont fixés à ladite structure de support (4) dans des positions opposées entre elles.
